# EUROPÄISCHE PATENTSCHRIFT

(11) **EP 0 823 468 B1**
(45) Veröffentlichungstag und Bekanntmachung des Hinweises auf die Patenterteilung: **12.07.2000**
(21) Anmeldenummer: 97108439.7
(22) Anmeldetag: 26.05.1997
(51) Int. Cl.: C09K 21/14, C08K 11/00

(54) **Feuerhemmender Werkstoff und Verfahren zur Herstellung eines solchen Werkstoffes**
Fire-retardant composite and process for its preparation
Composé résistant au feu et procédé pour sa préparation

(30) Priorität: 07.08.1996 DE 19631813
(43) Veröffentlichungstag der Anmeldung: 11.02.1998
(73) Patentinhaber: B & F Formulier- und Abfüll GmbH & Co. KG, 57489 Drolshagen-Iseringhausen (DE)
(72) Erfinder: Wunram, Heinz-Peter, 51580 Reichshof-Hahn (DE)
(74) Vertreter: Missling, Arne, Dipl.-Ing.

(56) Entgegenhaltungen:
- WO-A-93/05118
- DE-A- 4 101 539
- DE-A- 4 311 794

## Beschreibung

Die Erfindung betrifft einen feuerhemmenden Werkstoff, der bei einer erhöhten Umgebungstemperatur intumesziert, sowie ein Verfahren zur Herstellung eines solchen feuerhemmenden Werkstoffes.

Es ist bereits bekannt, bei Kabelkanälen intumeszierende Werkstoffe als brandschützenden, streich- und/oder spritzfähigen Auftrag zu verwenden, der bei einer die Raum-Temperatur erheblich übersteigenden Temperatur zu einem formbeständigen, feuerhemmenden, das Innere des Kanals wärmeisolierenden Schaumkorpus aufschäumt. Ein derartiger Werkstoff steht beispielsweise unter dem Handelsnamen "Pyro-Safe" zur Verfügung; er ist problemlos zu verarbeiten und entwickelt insbesondere, weder bei seiner Verarbeitung noch bei einem Brand, giftige Gase. Bei einer bestimmten, im Falle eines Brandes schnell erreichten Über-Temperatur bildet er allseits einen Schaumkorpus aus, dessen Dicke die ursprüngliche Schichtdicke des Auftrages um ein Vielfaches übertrifft und auf diese Weise durch die von der Intumeszenz bewirkten Volumenzunahme bei einem mit Temperaturerhöhung verbundenen Störfall, beispielsweise einem Brand, zeitweilig eine absperrende Wirkung in dem Strömungsweg in der Nähe der Abdichtstelle erzielt.

Der intumeszierende Werkstoff wird in der Regel in Kartuschen abgefüllt und in dieser Form gehandelt und verarbeitet. Dabei hat es sich gezeigt, daß ein solcher, aus Fungiziden, Dispergier- und Benetzungsmitteln, Weichmachern, Frostschutzmitteln, Füllstoffen, Farbstoffen, die Intumeszenz bewirkenden Treibmitteln, die absperrende Wirkung des intumeszierten Werkstoffes bestimmenden Sperrstoffen und Bindemitteln bestehender Werkstoff nur während einer beschränkten Zeitdauer verarbeitungsfähig ist und sich danach, unter Ausscheiden von Wasser, gummiartig verfestigt. Er kann dann zumeist aus den Kartuschen nicht mehr entnommen und auch nicht mehr funktionssicher verarbeitet werden.

Die Erfindung hat sich deshalb die Aufgabe gestellt, diesen Mangel abzustellen und einen Werkstoff der eingangs genannten Art so auszubilden, daß er auch dann unbeschränkt verarbeitbar ist, wenn er in Kartuschen konfektioniert ist und eine lange Lagerzeit aufweist.

Erfindungsgemäß wird die Aufgabe durch einen solchen Werkstoff mit der folgenden Zusammensetzung in Gewichts-% gelöst:

| | | |
|---|---|---|
| (a) | 25 - 45 % | Bindemittel, |
| | 0 - 0,5 % | Fungizide, |
| | 0,2 - 1 % | Dispergier- und Benetzungsmittel, |
| | 1 - 5 % | Weichmacher und |
| | 0 - 2 % | Frostschutzmittel; |
| | | |
| (b) | 20 - 40 % | Füllstoffe, |
| | 0 - 3 % | Farbstoffe, |
| | | |
| (c) | 4 - 6 % | die Intumeszenz bewirkende Treibmittel, |
| | 16 - 25 % | die absperrende Wirkung des intumeszierten Abdicht-Werkstoffes bestimmenden Sperrstoffe und |
| | | |
| (d) | 0,2 - 1,5 % | wasserhaltige Zellulose. |

Es wurde gefunden, daß eine gummiartige, die weitere Verarbeitung verhindernde Verfestigung des Werkstoffes durch die beigegebenen Sperrstoffe eintritt, welche die Aufgabe haben, im Brandfall eine feste Kruste zu bilden, die den intumeszierten Werkstoff festigt und in die Laqe versetzt, selbst einem starken Wasserstrahl standzuhalten, wie er zur Brandbekämpfung erforderlich ist; die Versteifung des Werkstoffes nach seiner Volumenzunahme bewirkt, daß die Dichtwirkung auch dann erhalten bleibt, wenn er einem Wasserstrahl direkt ausgesetzt ist.

Besonders das als Sperrstoff gebräuchliche und dafür auch sehr geeignete Ammoniumpolyphosphat ist für die zeitabhängige, bereits vor einer zweckentsprechenden Benutzung eintretende Verfestigung des Werkstoffes verantwortlich, weil es das in dem Bindemittel dispergierte Wasser bindet, das normalerweise die leichte Verarbeitbarkeit des Werkstoffes sicherstellt. Durch das Ammoniumpolyphosphat koaguliert und zerbricht die Dispersion, und die pastöse Beschaffenheit des Werkstoffes geht verloren.

Ganz überraschend hat es sich gezeigt, daß dieser Effekt beseitigt werden kann, wenn dem Werkstoff nunmehr auch ein Zellulose-Anteil zugefügt wird, der das Wasser der Dispersion bindet und diese vor dem Koagulieren bewahrt. Es ist ferner bemerkenswert, daß es dabei auf die chemische Zusammensetzung der Zellulose überhaupt nicht ankommt. Ihr Anteil in Gewichts-% an dem Werkstoff ist relativ gering; bewegt er sich zwischen 0,1 und 0,5%, dann wurden durchweg gute Ergebnisse erzielt.

Weitere vorteilhafte Ausgestaltungen des erfindungsgemäßen Werkstoffes enthalten die Unteransprüche. Einen besonders wirksamer Werkstoff erhält man durch die in dem nachfolgenden Beispiel 1 aufgeführte chemische Zusammensetzung.

Beispiel 1, Zusammensetzung eines erfindungsgemäßen Werkstoffes (in Gewichts-%:)

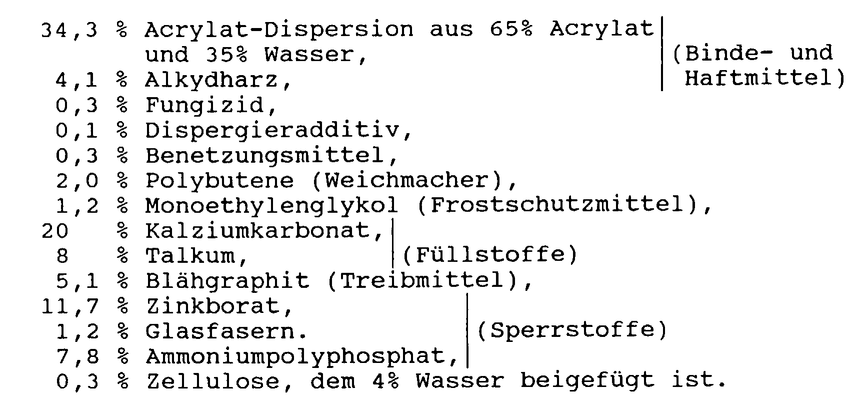

Ein solcher Werkstoff bleibt über einen langen Zeitraum in den Kartuschen streichfähig und kann entsprechend problemlos entnommen und verarbeitet werden.

Für die Herstellung eines erfindungsgemäßen Werkstoffes hat es sich als wesentlich herausgestellt, daß dabei zunächst die Zellulose mit Wasser versetzt und, nach dem nachfolgenden Aufquellen der Zelluose, das Ammoniumpolyphosphat zugesetzt wird. Diese Reihenfolge allein entscheidet über die Wirksamkeit der Herstellung, nicht aber, ob die Zellulose allein oder zusammen mit dem Ammoniumpolyphosphat dem Werkstoff zugefügt wird. Es ist demzufolge einerseits möglich, daß die Zellulose zunächst mit dem Wasser angerührt, nach dem folgenden Aufquellen mit dem Ammoniumpolyphosphat versetzt und in dieser Form den bereits gemischten übrigen Bestandteilen des Werkstoffes zugefügt wird, andererseits aber auch, daß zunächst die Zellulose und, nach deren Aufquellen, das Ammoniumpolyphosphat dem aus den übrigen Bestandteilen bereits gemischten Werkstoff zugefügt werden.

Weiterhin ist es zweckmäßig, wenn bei der Herstellung des erfindungsgemäßen Werkstoffes zunächst die pulverförmigen Bestandteile gemischt und danach den flüssigen Bestandteilen zugefügt werden; diese werden am besten vorher getrennt gemischt.

## Patentansprüche

1. Feuerhemmender Werkstoff, der bei einer erhöhten Umgebungstemperatur intumesziert,
gekennzeichnet durch folgende Zusammensetzung in Gewichts-%:
| | | |
|---|---|---|
| (a) | 25 - 45 % | Bindemittel, |
| | 0 - 0,5 % | Fungizide, |
| | 0,2 - 1 % | Dispergier- und Benetzungsmittel, |
| | 1 - 5 % | Weichmacher und |
| | 0 - 2 % | Frostschutzmittel; |
| | | |
| (b) | 20 - 40 % | Füllstoffe, |
| | 0 - 3 % | Farbstoffe, |
| | | |
| (c) | 4 - 6 % | die Intumeszenz bewirkende Treibmittel, |
| | 16 - 25 % | die absperrende Wirkung des intumeszierten Abdicht-Werkstoffes bestimmenden Sperrstoffe und |
| | | |
| (d) | 0,2 - 1,5 %, | vorzugsweise 0,1 - 0,5% wasserhaltige Zellulose. |

2. Feuerhemmender Werkstoff nach Anspruch 1, gekennzeichnet durch folgende Zusammensetzung in Gewichts-%:
| | |
|---|---|
| 38 % | Binde- und Haftmittel, |
| 0,3 % | Fungizide, |
| 0,4 % | Dispergier- und Benetzungsmittel, |
| 2,0 % | Weichmacher, |
| 0,4 % | Frostschutzmittel, |
| 28 % | Füllstoffe, |
| 1,3 % | Farbstoffe, |
| 5,1 % | Treibmittel |
| 20,7 % | Sperrstoffe und |
| 0,3 % | wasserhaltige Zellulose. |

3. Feuerhemmender Werkstoff nach Anspruch 1 oder 2, gekennzeichnet durch folgende Zusammensetzung in Gewichts-%:
| | |
|---|---|
| 34,3 % | Acrylat-Dispersion und 4,1 % Alkydharz als Binde und Haftmittel, |
| 0,3 % | Fungizid, |
| 0,1 % | Dispergieradditiv, |
| 0,3 % | Benetzungsmittel, |
| 2,0 % | Polybutene als Weichmacher, |
| 1,2 % | Monoethylenglykol als Frostschutzmittel, |
| 28 % | Füllstoff, |
| 5,1 % | Blähgraphit als Treibmittel, |
| 11,7 % | Zinkborat, 1,2 % Glasfasern und 7,8 % Ammoniumpolyphosphat als Sperrstoffe, |
| 0,3 % | wasserhaltige Zellulose. |

4. Feuerhemmender Werkstoff nach einem der Ansprüche 1 bis 3, dadurch gekennzeichnet, daß als Füllstoff ein Gemisch von 15 - 25 %, vorzugsweise 20 % Kalziumkarbonat und 5 - 10 %, vorzugsweise 8 % Talkum verwendet wird.

5. Feuerhemmender Werkstoff nach einem der Ansprüche 1 bis 4, dadurch gekennzeichnet, daß Eisenoxid als Farbstoff verwendet wird.

6. Feuerhemmender Werkstoff nach einem der Ansprüche 3 bis 5, dadurch gekennzeichnet, daß die Alkrylatdispersion aus 65 % Acrylat und 35 % Wasser besteht.

7. Feuerhemmender Werkstoff nach einem der Ansprüche 1 bis 6, dadurch gekennzeichnet, daß der Zellulose 3-5 %, vorzugsweise 4 % Wasser zugesetzt ist.

8. Verfahren zur Herstellung eines feuerhemmenden Werkstoffes nach einem oder mehreren der Ansprüche 1 bis 7, dadurch gekennzeichnet, daß zunächst die Zellulose mit Wasser versetzt und, nach dem nachfolgenden Aufquellen der Zelluose, das Ammoniumpolyphosphat zugesetzt wird.

9. Verfahren zur Herstellung eines feuerhemmenden Werkstoffes nach Anspruch 8, dadurch gekennzeichnet, daß die Zellulose zunächst mit dem Wasser angerührt, nach dem folgenden Aufquellen mit dem Ammoniumpolyphosphat versetzt und in dieser Form den bereits gemischten übrigen Bestandteilen des Absperr-Werkstoffes zugefügt wird.

10. Verfahren zur Herstellung eines feuerhemmenden Werkstoff nach Anspruch 8, dadurch gekennzeichnet, daß zunächst die Zellulose und, nach deren Aufquellen, das Ammoniumpolyphosphat dem aus den übrigen Bestandteilen bereits gemischten Werkstoff zugefügt werden.

11. Verfahren nach einem oder mehreren der Ansprüche 1 bis 10, dadurch gekennzeichnet, daß zunächst die pulverförmigen Bestandteile gemischt und danach den flüssigen Bestandteilen zugefügt werden.

12. Verfahren nach Anspruch 11, dadurch gekennzeichnet, daß die flüssigen Bestandteile getrennt gemischt werden.

## Claims

1. A fire-retardant material which intumesces at an elevated ambient temperature,
**characterized by the following composition** in % by weight:
| | | |
|---|---|---|
| (a) | 25 - 45 % | binders, |
| | 0 - 0·5 % | fungicides, |
| | 0·2 - 1 % | dispersing and wetting agents, |
| | 1 - 5 % | softeners, and |
| | 0 - 2 % | anti-freeze agents; |
| (b) | 20 - 40 % | fillers, |
| | 0 - 3 % | colorants; |
| (c) | 4 - 6 % | propellants which produce intumescence, |
| | 16 - 25 % | blocking agents determining the blocking action of the sealing material which has intumesced, and |
| (d) | 0·2 - 1·5 %, | preferably 0·1 - 0·5 %, aqueous cellulose. |

2. A fire-retardant material according to Claim 1, **characterized by the following composition** in % by weight:
| | |
|---|---|
| 38 % | binders and adhesives, |
| 0·3 % | fungicides, |
| 0·4 % | dispersing and wetting agents, |
| 2·0 % | softeners, |
| 0·4 % | anti-freeze agents, |
| 28 % | fillers, |
| 1·3 % | colorants, |
| 5·1 % | propellants, |
| 20·7 % | blocking agents and |
| 0·3 % | aqueous cellulose. |

3. A fire-retardant material according to Claim 1 or 2, **characterized by the following composition** in % by weight:
| | |
|---|---|
| 34·3 % | acrylate dispersion and 4·1 % alkyd resin as binders and adhesives, |
| 0·3 % | fungicide, |
| 0·1 % | dispersion additive, |
| 0·3 % | wetting agent, |
| 2·0 % | polybutenes as a softener, |
| 1·2 % | monoethylene glycol as an anti-freeze agent, |
| 28 % | filler, |
| 5·1 % | intumesced graphite as a propellant, |
| 11·7 % | zinc borate, 1·2 % glass fibres and 7·8 % ammonium polyphosphate as blocking agents and |
| 0·3 % | aqueous cellulose. |

4. A fire-retardant material according to one of Claims 1 to 3, **characterized in that** a mixture of 15 - 25 %, preferably 20 %, calcium carbonate and 5 - 10 %, preferably 8 %, talc is used as a filler.

5. A fire-retardant material according to one of Claims 1 to 4, **characterized in that** iron oxide is used as a colorant.

6. A fire-retardant material according to one of Claims 3 to 5, **characterized in that** the acrylate dispersion consists of 65 % acrylate and 35 % water.

7. A fire-retardant material according to one of Claims 1 to 6, **characterized in that** 3 - 5 %, preferably 4 %, water is added to the cellulose.

8. A process for producing a fire-retardant material according to one or more of Claims 1 to 7, **characterized in that** first the cellulose is mixed with water and, after the subsequent swelling of the cellulose, the ammonium polyphosphate is added.

9. A process for producing a fire-retardant material according to Claim 8, **characterized in** that the cellulose is first stirred with the water, after the subsequent swelling it is mixed with the ammonium polyphosphate and in this form it is added to the already mixed remaining constituents of the blocking material.

10. A process for producing a fire-retardant material according to Claim 8, **characterized in** that first the cellulose and, after its swelling, the ammonium polyphosphate are added to the material already mixed from the remaining constituents.

11. A process according to one or more of Claims 1 to 10, **characterized in that** first the constituents in powder form are mixed and after that they are added to the liquid constituents.

12. A process according to Claim 11, **characterized in that** the liquid constituents are mixed separately.

## Revendications

1. Matériau coupe-feu qui devient intumescent à une température ambiante augmentée, caractérisé par la composition suivante en % en poids :
| | | |
|---|---|---|
| (a) | 25 - 45 % | de liant |
| | 0 - 0,5 % | de fongicides |
| | 0,2 - 1 % | de dispersants et d'agents mouillants, |
| | 1 - 5 % | de plastifiant et |
| | 0 - 2 % | d'antigel ; |
| (b) | 20 - 40 % | de charges, |
| | 0 - 3 % | de colorants, |
| (c) | 4 - 6 % | d'agents gonflants provoquant la tumescence, |
| | 16 - 25 % | de matières formant barrière déterminant l'effet de blocage du matériau d'étanchéité intumescent et |
| (d) | 0,2 - 1,5 %, | de préférence 0,1 - 0,5 %, de cellulose hydratée. |

2. Matériau coupe-feu selon la revendication 1, caractérisé par la composition suivante en % en poids :
| | |
|---|---|
| 38 % | de liants et d'adhésifs, |
| 0,3 % | de fongicides |
| 0,4 % | de dispersants et d'agents mouillants, |
| 2,0 % | de plastifiants, |
| 0,4 % | d'antigel, |
| 28 % | de charges, |
| 1,3 % | de colorants, |
| 5,1 % | d'agents gonflants, |
| 20,7 % | de matières formant barrière et |
| 0,3 % | de cellulose hydratée. |

3. Matériau coupe-feu selon la revendication 1 ou 2, caractérisé par la composition suivante en % en poids :
| | |
|---|---|
| 34,3 % | d'une dispersion d'acrylate et 4,1 % de résine alkyde en tant que liants et adhésifs, |
| 0,3 % | de fongicide, |
| 0,1 % | d'additif dispersant, |
| 0,3 % | d'agent mouillant, |
| 2,0 % | de polybutène en tant que plastifiant, |
| 1,2 % | de monoéthylèneglycol en tant qu'antigel, |
| 28 % | de charge, |
| 5,1 % | de graphite expansé en tant qu'agent gonflant, |
| 11,7 % | de borate de zinc, 1,2 % de fibres de verre et 7,8 % de polyphosphate d'ammonium en tant que matières formant barrière, |
| 0,3 % | de cellulose hydratée. |

4. Matériau coupe-feu selon l'une des revendications 1 à 3, caractérisé en ce qu'on utilise, comme charge, un mélange de 15 à 25 %, de préférence 20 %, de carbonate de calcium et de 5 à 10 %, de préférence 8 %, de talc.

5. Matériau coupe-feu selon l'une des revendications 1 à 4, caractérisé en ce qu'on utilise de l'oxyde de fer comme colorant.

6. Matériau coupe-feu selon l'une des revendications 3 à 5, caractérisé en ce que la dispersion d'acrylate est formée de 65 % d'acrylate et 35 % d'eau.

7. Matériau coupe-feu selon l'une des revendications 1 à 6, caractérisé en ce qu'on ajoute 3 à 5 %, de préférence 4 %, d'eau à la cellulose.

8. Procédé de fabrication d'un matériau coupe-feu selon une ou plusieurs des revendications 1 à 7, caractérisé en ce qu'on mélange d'abord la cellulose avec l'eau, et, après le gonflement subséquent de la cellulose, on ajoute le polyphosphate d'ammonium.

9. Procédé de fabrication d'un matériau coupe-feu selon la revendication 8, caractérisé en ce qu'on délaie d'abord la cellulose avec l'eau, après son gonflement subséquent, on la mélange avec le polyphosphate d'ammonium, et, sous cette forme, on l'ajoute aux composants restants, déjà mélangés, du matériau formant barrière.

10. Procédé de fabrication d'un matériau coupe-feu selon la revendication 8, caractérisé en ce qu'on ajoute d'abord la cellulose, et, après le gonflement de celle-ci, on ajoute le polyphosphate d'ammonium au matériau formé des composants restants déjà mélangés.

11. Procédé selon une ou plusieurs des revendications 1 à 10, caractérisé en ce qu'on mélange d'abord les composants pulvérulents et, ensuite, on les ajoute aux composants liquides.

12. Procédé selon la revendication 11, caractérisé en ce que les composants liquides sont mélangés séparément.
